(19) Europäisches Patentamt

European Patent Office

Office européen des brevets

(11) Veröffentlichungsnummer : **0 329 982 B1**

(12) **EUROPÄISCHE PATENTSCHRIFT**

(45) Veröffentlichungstag der Patentschrift :
**29.04.92 Patentblatt 92/18**

(21) Anmeldenummer : **89101678.4**

(22) Anmeldetag : **01.02.89**

(51) Int. Cl.⁵ : **B23Q 11/08,** B23Q 1/06

(30) Priorität : **25.02.88 DE 3805842**

(43) Veröffentlichungstag der Anmeldung :
**30.08.89 Patentblatt 89/35**

(45) Bekanntmachung des Hinweises auf die
Patenterteilung :
**29.04.92 Patentblatt 92/18**

(84) Benannte Vertragsstaaten :
**CH DE ES FR GB IT LI SE**

(56) Entgegenhaltungen :
**EP-A- 0 216 217**
**US-A- 2 443 734**

(54) **Werkzeugmaschine.**

(73) Patentinhaber : **CHIRON-WERKE GMBH & CO.
KG
Talstrasse 23
W-7200 Tuttlingen (DE)**

(72) Erfinder : **Winkler, Hans-Henning, Dr.
Brunnentalstrasse 88
W-7200 Tuttlingen (DE)**
Erfinder : **Rütschle, Eugen
Schönenbergstrasse 20
W-7202 Mühlheim (DE)**

(74) Vertreter : **Witte, Alexander, Dr.-Ing.
Witte, Weller & Gahlert Patent- und
Rechtsanwälte Augustenstrasse 7
W-7000 Stuttgart 1 (DE)**

## Beschreibung

Die Erfindung betrifft eine Werkzeugmaschine mit einem lageveränderlichen Werkstücktisch, bei dem ein erster Bereich in einer ersten Position als Bearbeitungsseite erste Werkstücke zum Bearbeiten mittels eines Werkzeuges der Werkzeugmaschine trägt und bei dem ein zweiter Bereich in einer zweiten Position als Bestückungsseite während des Bearbeitens der ersten Werkstücke mit zweiten Werkstücken bestückbar ist, wobei die Position der Bereiche durch Lageveränderung des Werkstücktisches vertauschbar ist, und ferner zwischen den Bereichen eine Spritzschutzwand angeordnet ist, die an ihrer Unterseite um eine parallel zur Oberfläche des Werkstücktisches verlaufende Schwenkachse selbsttätig verschwenkbar ist und den von den Bereichen definierten Arbeitsraum für eine Spindel der Werkzeugmaschine bzw. einen Benutzer asymmetrisch unterteilt, derart, daß auf der Bearbeitungsseite ein größerer Arbeitsraum vorhanden ist als auf der Bestückungsseite.

Eine derartige Werkzeugmaschine ist aus der DE-PS 35 33 089 bekannt.

Bei der bekannten Werkzeugmaschine besteht die Spritzschutzwand aus zwei Wandelementen. Die Wandelemente sind um zueinander parallele Schwenkachsen verschwenkbar, die symmetrisch zueinander im radialen Abstand von der vertikalen Drehachse des Werkstücktisches auf dessen Oberfläche verlaufen. Die beiden Wandelemente sind mittels paralleler Stangen miteinander verbunden, so daß sie in Abhängigkeit von dem auf diese Weise gebildeten Gelenkviereck miteinander verschwenkbar sind. Wird der Werkstücktisch um seine vertikale Achse verdreht und zwar im wesentlichen um 180°, so werden die beiden Wandelemente so verschwenkt, daß das jeweils auf der Bestückungsseite angeordnete Wandelement im wesentlichen senkrecht von der Oberfläche des Werkstücktisches absteht, während das jeweils auf der Bearbeitungsseite angeordnete Wandelement zur Bestückungsseite hin geneigt ist. Die Wandelemente werden selbsttätig mittels eines Gelenkvielecks verschwenkt, das beim Verdrehen des Werkstücktisches an einen raumfesten Anschlag zur Anlage kommt.

Auf diese Weise wird erreicht, daß der Arbeitsraum oberhalb des Werkstücktisches auf der Bearbeitungsseite stets größer ist als auf der Bestückungsseite. Auf diese Weise kann eine in horizontaler Richtung ausladende Spindel der Werkzeugmaschine mit ihrer Außenkontur bis über die Mitte des Werkstücktisches hinaus auf die Bestückungsseite verfahren werden, während das in die Spindel eingespannte Werkzeug noch auf der Bearbeitungsseite das Werkstück bearbeitet.

Die bekannte Werkzeugmaschine hat jedoch den Nachteil, daß der Oberflächenbereich des Werkstücktisches zwischen den beiden Wandelementen weder für Bestückungs- noch für Bearbeitungsaufgaben nutzbar ist. Auch ist ein relativ umständliches Gestänge erforderlich, um die Wandelemente in der genannten Weise selbsttätig zu verschwenken.

Der Erfindung liegt daher die Aufgabe zugrunde, eine Werkzeugmaschine der eingangs genannten Art dahingehend weiterzubilden, daß die gesamte Oberfläche des Werkstücktisches genutzt werden kann und daß zum Verschwenken der Spritzschutzwand nur eine sehr einfache Mechanik erforderlich ist.

Diese Aufgabe wird erfindungsgemäß zum einen dadurch gelöst, daß die Spritzschutzwand an ihrer Oberseite von einem Halteelement gehalten ist, das die Oberseite beidseits erfassende gabelartige Fortsätze aufweist, daß das Halteelement im radialen Abstand von einer vertikalen ersten Drehachse des Werkstücktisches oberhalb der Bestückungsseite angeordnet ist und daß die Fortsätze um eine in dem Abstand parallel zur ersten Drehachse verlaufende zweite Drehachse drehbar sind.

Die der Erfindung zugrundeliegende Aufgabe wird erfindungsgemäß ferner dadurch gelöst, daß die Spritzschutzwand an ihrer Oberseite von einem Halteelement gehalten ist, das die Oberseite beidseits erfassende gabelartige Fortsätze aufweist, und daß das Halteelement und der Werkstücktisch relativ zueinander in einer Richtung verschiebbar sind, die im wesentlichen senkrecht zur Schwenkachse verläuft.

Die der Erfindung zugrundeliegende Aufgabe wird auf diese Weise vollkommen gelöst.

Die erstgenannte Lösung ist dabei für den Fall gedacht, daß es sich um eine Werkzeugmaschine mit einem um eine vertikale Achse drehbaren Werkstücktisch handelt. In diesem Falle ist lediglich ein raumfestes, um eine vertikale Achse drehbares gabelartiges Element erforderlich, das die Oberseite der Spritzschutzwand ergreift, mit der überraschenden Wirkung, daß die Spritzschutzwand sich selbsttätig zwischen ihren beiden Schwenk-Endlagen verschwenkt, ohne daß gesonderte Gestänge oder Getriebe erforderlich sind. Die Spritzschutzwand verschwenkt sich vielmehr vollkommen selbsttätig alleine dadurch, daß auch der Werkstücktisch gedreht wird.

Die zweitgenannte Lösung ist hingegen für die folgenden beiden Fälle gedacht:

Im einen Falle ist der Werkstücktisch raumfest und als Langbettisch ausgebildet, bei dem zwei Positionen für Werkstücke in Längsrichtung des Werkstücktisches nebeneinander angeordnet sind. Die Spindel der Werkzeugmaschine ist zwischen diesen beiden Positionen parallel zur Längsrichtung des Werkstücktisches verfahrbar. In diesem Falle kann die Spritzschutzwand durch das ebenfalls parallel zur Werkstücklängsachse verschiebbare Halteelement in Richtung der Längsachse umgeschwenkt werden.

Bei der zweiten Variante ist der als Langbettisch ausgebildete Werkstücktisch hingegen in seiner Längsachse verschiebbar, während das Halteelement in der Längsachse raumfest angeordnet ist.

In beiden Fällen wird - von der Seite des Werkstücktisches aus betrachtet - jeweils rechts oder links von der Spritzschutzwand ein größerer Arbeitsraum für die Spindel der Werkzeugmaschine zur Verfügung gestellt, während im jeweils kleineren Arbeitsraum, d.h. auf der jeweiligen Bestückungsseite, das zuvor bearbeitete Werkstück gegen einen noch unbearbeiteten Werkstück-Rohling ausgetauscht werden kann.

Bei einer bevorzugten Ausgestaltung der erfindungsgemäßen Werkzeugmaschine ist das Halteelement an der Unterseite einer abgekröpften raumfesten Spritzschutzwand angeordnet.

Diese Maßnahme hat den Vorteil, daß nur ein unterer Abschnitt der gesamten Spritzschutzwand verschwenkt werden muß, was den mechanischen Aufwand erleichtert und eine weit in die Höhe reichende Abdeckung gegen herumspritzendes Bohrwasser und herumfliegende Materialspäne gewährleistet.

Bei einer weiteren bevorzugten Ausgestaltung der Erfindung ist das Halteelement als nach unten geöffnetes gabelförmiges Teil ausgebildet.

Diese Maßnahme hat den Vorteil, daß eine präzise Führung der Oberseite der Spritzschutzwand möglich ist, weil das gabelförmige Teil z.B. aus Metall oder einem harten Kunststoff hergestellt werden kann, Materialien also, die keinem Abrieb unterliegen. Auch kann die Höhe der Zinken des gabelförmigen Teiles gerade so dimensioniert werden, daß die Oberseite der Spritzschutzwand in einer senkrechten Position der Spritzschutzwand bei deren Verschwenken gerade oben an den Grund des gabelförmigen Teiles anstößt, während in der unteren Endstellung, wenn die Spritzschutzwand gerade ihre am meisten geneigte Position einnimmt, die Oberseite gerade noch von den unteren Enden des gabelförmigen Teiles gehalten wird. Wenn der Verschwenkwinkel der Spritzschutzwand nicht zu groß ist, kann auf diese Weise eine Anordnung erreicht werden, bei der die Zinken des gabelförmigen Teiles nicht durch eine entsprechende Aussparung der Spritzschutzwand hindurchgeführt werden müssen.

Bei einem alternativen Ausführungsbeispiel hierzu ist hingegen das Halteelement als elastische Lippe ausgebildet, die sich parallel zur Oberseite erstreckt und beidseits eines mittig angeordneten Schlitzes die schwenkbare Spritzschutzwand mit je einer Hälfte auf verschiedenen Seiten überlappt.

Diese Maßnahme hat den Vorteil, daß ein Drehlager für das Halteteil nicht vorgesehen zu werden braucht, weil die elastischen Hälften der Lippe in dem Bereich, in dem die Oberseite der Spritzschutzwand in dem Schlitz läuft, sich infolge ihrer Elastizität hinreichend verdrehen können, wenn der Werkstücktisch um eine vertikale Achse drehbar ausgebildet ist. Die Breite des Schlitzes braucht dabei nicht größer zu sein als die Dicke der Spritzschutzwand.

Schließlich ist noch ein weiteres Ausführungsbeispiel der Erfindung bevorzugt, bei dem die Oberseite der Spritzschutzwand in der Mitte erhöht ist.

Diese Maßnahme hat den Vorteil, daß die gabelartigen Fortsätze besonders kurz ausgebildet werden können, weil in den abgeschwenkten Endstellungen der Spritzschutzwand, in denen die Oberseite am weitesten aus den gabelartigen Fortsätzen herausgeleitet, die erhöhte Mitte der Spritzschutzwand von den gabelartigen Fortsätzen ergriffen wird, während in der mittleren Extremstellung, in der die Spritzschutzwand vertikal steht, die gabelartigen Fortsätze lediglich die niedrigeren Seitenbereiche der Oberseite umfassen müssen.

Weitere Vorteile ergeben sich aus der Beschreibung und der beigefügten Zeichnung.

Es versteht sich, daß die vorstehend genannten und die nachstehend noch erläuterten Merkmale nicht nur in der jeweils angegebenen Kombination sondern auch in anderen Kombinationen oder in Alleinstellung gemäß Anspruch 1 verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine schematisierte Seitenansicht eines ersten Ausführungsbeispiels einer erfindungsgemäßen Werkzeugmaschine mit einem gabelförmigen Halteteil;

Fig. 2 eine Darstellung, ähnlich Fig. 1, jedoch für ein zweites Ausführungsbeispiel einer erfindungsgemäßen Werkzeugmaschine mit einer elastischen Lippe als Halteteil, und zwar in Richtung II-II von Fig. 2a;

Fig. 2a eine ausschnittsweise Seitenansicht der Anordnung gemäß Fig.2;

Fig. 3 bis 8 Seitenansichten und Draufsichten des in Fig. 1 dargestellten Ausführungsbeispiels für sechs verschiedene Drehpositionen des Werkstücktisches;

Fig. 9 bis 11 Seitenansichten und Draufsichten von drei verschiedenen Verschiebestellungen eines Werkstücktisches, der relativ zu einem Halteelement axial verschiebbar ist.

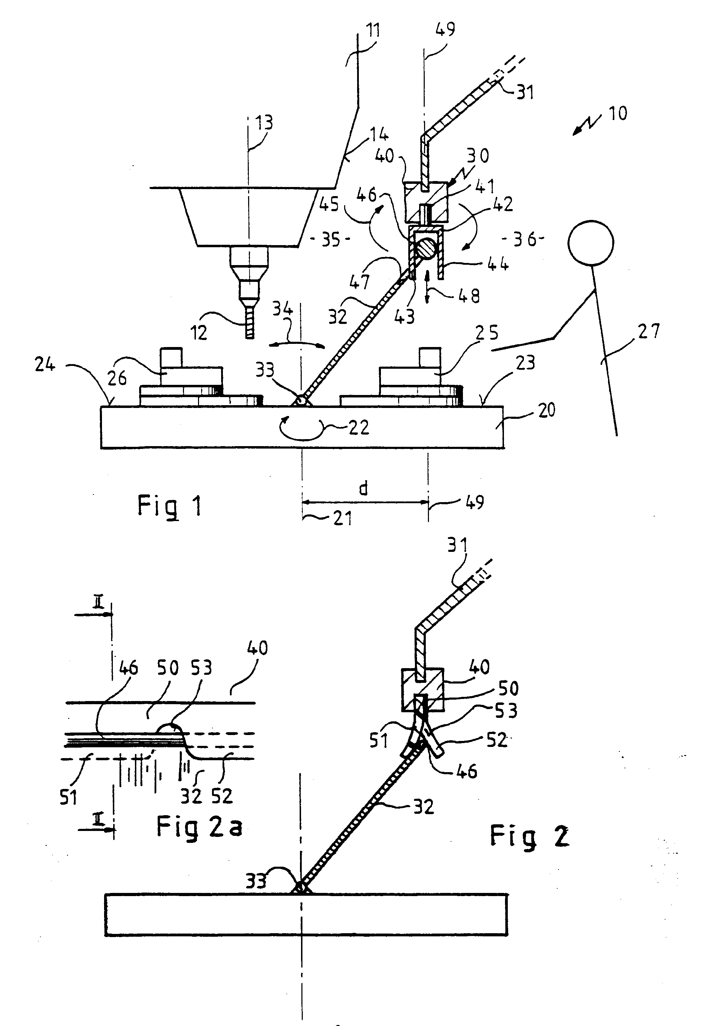

In Fig. 1 bezeichnet 10 insgesamt eine Werkzeugmaschine, vorzugsweise ein Bearbeitungszentrum mit vertikalachsiger Spindel. Derartige Bearbeitungszentren dienen im wesentlichen zum Bohren und Fräsen von Werkstücken mit Hilfe einer numerischen Steuerung, wobei nacheinander in die Spindel eine Vielzahl von Werkzeugen einsetzbar ist, um nacheinander verschiedenartige Bearbeitungsaufgaben an Werkstücken durchzuführen.

In Fig. 1 weist die Werkzeugmaschine 10 einen Spindelstock 11 auf, in dessen Aufnahme ein Werkzeug 12, z.B. ein Bohrer, eingespannt ist. Die Spindelachse 13 verläuft vertikal. Mit 14 ist die Außenkontur des Spindelstocks 11 bezeichnet. Man erkennt, daß die Außenkontur 14 deutlich in horizontaler Richtung über die Spindelachse 13 übersteht, so daß über den Angriffspunkt des Werkzeuges 12 hinaus noch die Außenkontur 14 als Störkontur für umgebende Bauelemente beachtet werden muß.

Ein Werkstücktisch 20 ist um eine vertikale Drehachse 21 in Richtung eines Pfeiles 22 verdrehbar und zwar vorzugsweise gegenläufig um jeweils 180°.

In dem vom Spindelstock 11 abgewandten Bereich sei die Oberfläche des Werkstücktisches 20 als Bestückungsseite 23 bezeichnet, während der gegenüberliegende Bereich als Bearbeitungs seite 24 dient. Auf der Bestückungsseite 23 kann ein unbearbeitetes Werkstück 25 von einem Benutzer 27 montiert werden, während auf der Bearbeitungsseite 24 ein Werkstück 26 vom Werkzeug 12 bearbeitet werden kann. Durch zyklische Verdrehung des Werkstücktisches 20 um jeweils 180° um die Drehachse 21 kann der Benutzer 27 bearbeitete Werkstücke auf der Bestückungsseite 23 entnehmen und noch unbearbeitete Werkstück-Rohlinge montieren, während gleichzeitig auf der Bearbeitungsseite 24 ganz oder teilweise unbearbeitete Werkstücke bearbeitet werden.

Um den Benutzer 27 vor Bohrwasser und Materialspänen zu schützen, die beim Bearbeiten des Werkstücks 26 auf der Bearbeitungsseite 24 herumfliegen, ist eine insgesamt mit 30 bezeichnete Spritzschutzwand zwischen der Bearbeitungsseite 24 und der Bestückungsseite 23 vorgesehen.

Dies Spritzschutzwand 30 weist einen oberen raumfesten Abschnitt 31 auf, der zum Benutzer 27 hin abgekröpft ist. Ein unterer, schwenkbarer Abschnitt 32 der Spritzschutzwand 30 ist mit seiner Unterseite um eine Schwenkachse 33 verschwenkbar, wie mit einem Pfeil 34 angedeutet. Aus der Seitenansicht der Fig. 1 ist deutlich zu erkennen, daß auf diese Weise oberhalb der Bearbeitungsseite 24 ein wesentlich größerer Arbeitsraum 35 entsteht als oberhalb der Bestückungsseite 23. Aufgrund dessen ist es möglich, daß der Spindelstock 11 mit seinem Werkzeug 12 bis in den Bereich der vertikalen Drehachse 21 hin verfahren wird, ohne daß die Außenkontur 14 des Spindelstocks 11 mit der Spritzschutzwand 30 kollidiert. Andererseits reicht der kleinere Arbeitsraum 36 oberhalb der Bestückungsseite 23 aus, weil der Benutzer 27 die Werkstücke 25 in der Regel von vorne und allenfalls von schräg oben auf die Bestückungsseite 23 aufsetzt bzw. von dieser abnimmt.

Um nun zu erreichen, daß die vorstehend beschriebenen Verhältnisse erhalten bleiben, wenn der Werkstücktisch 20 um die vertikale Drehachse 21 um 180° gedreht wird, ist folgendes vorgesehen:

An der Unterseite des raumfesten Abschnittes 31 der Spritzschutzwand 30 ist ein Lager 40 angeordnet, z.B. als durchgehender Balken, der sich senkrecht zur Zeichenebene der Fig. 1 erstreckt. An der Unterseite des Lagers 40 ist drehbar, jedoch höhenstarr ein Drehzapfen 41 gelagert, der an seiner Unterseite eine Gabel 42 trägt, die auf diese Weise um eine Achse 49 drehbar ist, die im Abstande d parallel zur vertikalen Drehachse 21 des Werkstücktisches 20 verläuft. Der Abstand d kann z.B. die Hälfe oder ein Drittel der Tiefe der Bestückungsseite 23 des Werkstücktisches 20 ausmachen.

Die Gabel 42 ist mit zwei nach unten weisenden Zinken 43 und 44 versehen, die ebenfalls in Richtung von Pfeilen 45 um die Achse 49 verdrehbar sind. Die Zinken 43, 44 schließen zwischen sich eine Profilleiste 46, beispielsweise einen Rundstab, ein, der eine Oberseite des schwenkbaren Abschnittes 32 der Spritzschutzwand 30 bildet. Die Profilleiste 46 dient lediglich zur mechanischen Verstärkung, ist jedoch nicht zwingend erforderlich.

Der schwenkbare Abschnitt 32 kann im Bereich unterhalb der Zinken 43, 44 mit einem Fenster 47 versehen sein, durch das die in Fig. 1 linke Zinke 43 hindurchragt, wenn dies aufgrund der Länge der Zinken 43, 44 erforderlich ist.

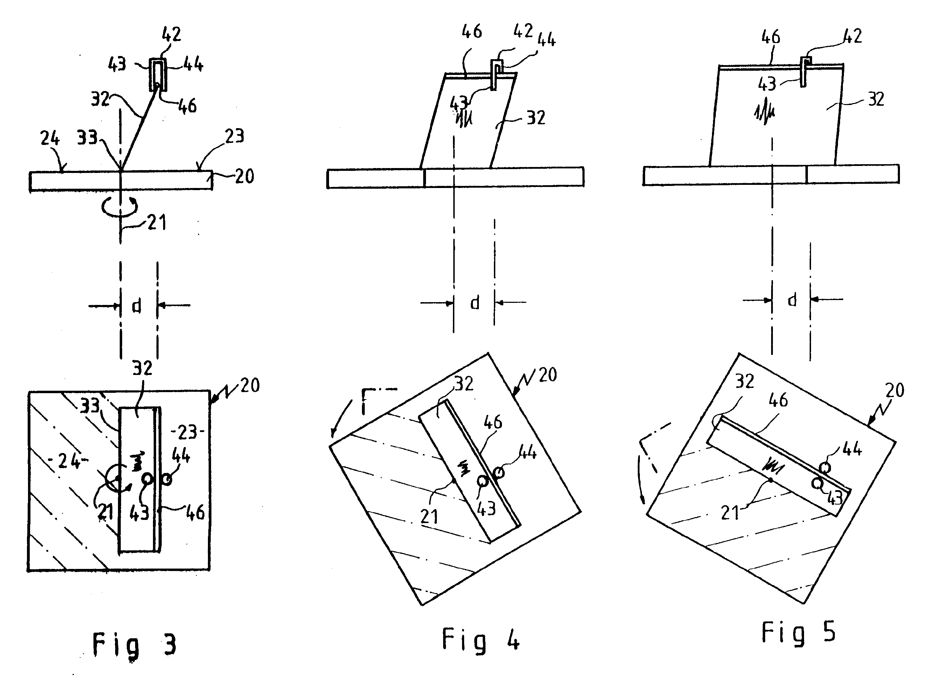

Wie weiter unten anhand der Fig. 3 bis 11 noch erläutert werden wird, vollführt die Profilleiste 46 beim Verschwenken des Werkstücktisches 20 eine Vertikalbewegung zwischen den Zinken 43, 44, wie mit einem Pfeil 48 angedeutet.

In den Fig. 2 und 2a ist ein alternatives Ausführungsbeispiel dargestellt, bei dem statt einer Gabel 42 mit Zinken 43, 44 eine elastische Lippe 50 verwendet wird.

Die elastische Lippe 50 erstreckt sich entlang der Oberseite des schwenkbaren Abschnittes 32 der Spritzschutzwand 30. Die elastische Lippe 50 ist in der Mitte mit einem Schlitz 53 versehen, dessen Breite im wesentlichen mit der Dicke der Oberseite des schwenkbaren Abschnittes 32 bzw. der Profilleiste 46 übereinstimmt. Die sich zu beiden Seiten des Schlitzes 53 erstreckenden Hälften 51 und 52 der elastischen Lippe 50 überlappen die Oberseite des schwenkbaren Abschnittes 32, im dargestellten Ausführungsbeispiel also die Profilleiste 46 auf unterschiedlichen Seiten, wie man deutlich aus der Fig. 2a erkennt.

In beiden Fällen wird somit erreicht, daß die Oberseite des schwenkbaren Abschnittes 32 beidseitig gehalten wird, wobei die hierzu verwendeten Fortsätze, d.h. die Zinken 43, 44 der Gabel 42 bzw. die Hälften 51, 52 der elastischen Lippe 50 in gewissem Ausmaße um die Achse 49 verdrehbar sind und zwar die Zinken 43, 44

4

aufgrund des Drehzapfens 41 und die Hälften 51, 52 aufgrund der Elastizität der Lippe 50.

Aus den Fig. 3 bis 8 wird die Wirkungsweise der Anordnung gemäß den Fig. 1 und 2 deutlich, wobei der Übersichtlichkeit halber die Fig. 3 bis 8 dies anhand eines Ausführungsbeispiels ähnlich der Fig. 1 verdeutlichen.

Fig. 3 zeigt oben in einer stark vereinfachten Seitenansicht nochmals die Situation der Fig. 1 und die untere Hälfte von Fig. 3 zeigt die zugehörige Draufsicht.

Man erkennt aus Fig. 3 deutlich, daß die Zinken 43 und 44 die Profilleiste 46 beidseits ergreifen. Wird nun der Tisch 20 um etwa 30° in Gegenuhrzeigerrichtung verdreht, entsteht die Situation der Fig. 4, in der die strichpunktiert eingezeichnete Bearbeitungsseite 24 bereits in der Draufsicht nach unten verschwenkt ist. Die Zinken 43, 44 sind gegenüber der Position der Fig. 3 axial nach außen auf der Profilleiste 46 gewandert, weil sich die Position des schwenkbaren Abschnittes 32 geändert hat, die Gabel 42 hingegen oberhalb des Werkstücktisches 20 raumfest gehalten ist und sich der Abstand d mithin nicht ändert. Da die Zinken 43, 44 auf beiden Seiten der Profilleiste 46 angreifen, hat sich die Gabel 42 verdreht und zwar ebenfalls um 30° verglichen mit der Position der Fig. 3.

Fig. 5 zeigt eine weitere Position des Werkstücktisches 20 nach einer erneuten Drehung um etwa 30° in Gegenuhrzeigerrichtung. Man erkennt, daß die Zinken 43, 44 noch weiter axial nach außen auf der Profilleiste 46 gewandert sind und aus der oberen Seitenansicht erkennt man, daß sich die Profilleiste 46 angehoben hat und jetzt dem Grund der Gabel 42 nähert.

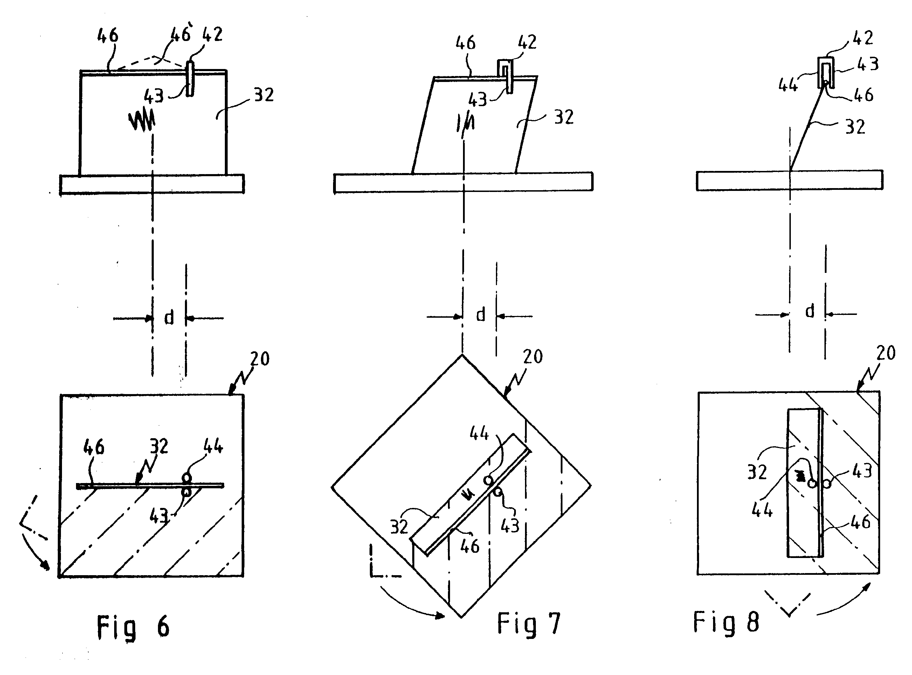

In Fig. 6 ist eine Zwischen-Extremstellung erreicht, in der der Werkstücktisch 20 um 90° im Gegenuhrzeigersinn relativ zur Ausgangsposition der Fig. 3 verdreht hat. Der schwenkbare Abschnitt 32 der Spritzschutzwand erstreckt sich nun vertikal von der Oberfläche des Werkstücktisches 20 weg, so daß die Profilleiste 46 den Grund der Gabel 42 erreicht hat. Die Zinken 43, 44 der Gabel 42 befinden sich in der äußersten Randstellung, nämlich gerade um den Abstand d von der Mitte der Profilleiste 46 entfernt.

Fig. 7 zeigt nun eine weitere Drehung um 45°, bei der die Zinken 43, 44 wieder zurück zur Mitte der Profilleiste 46 wandern und sich die Profilleiste 46 wiederum in der Gabel 42 absenkt.

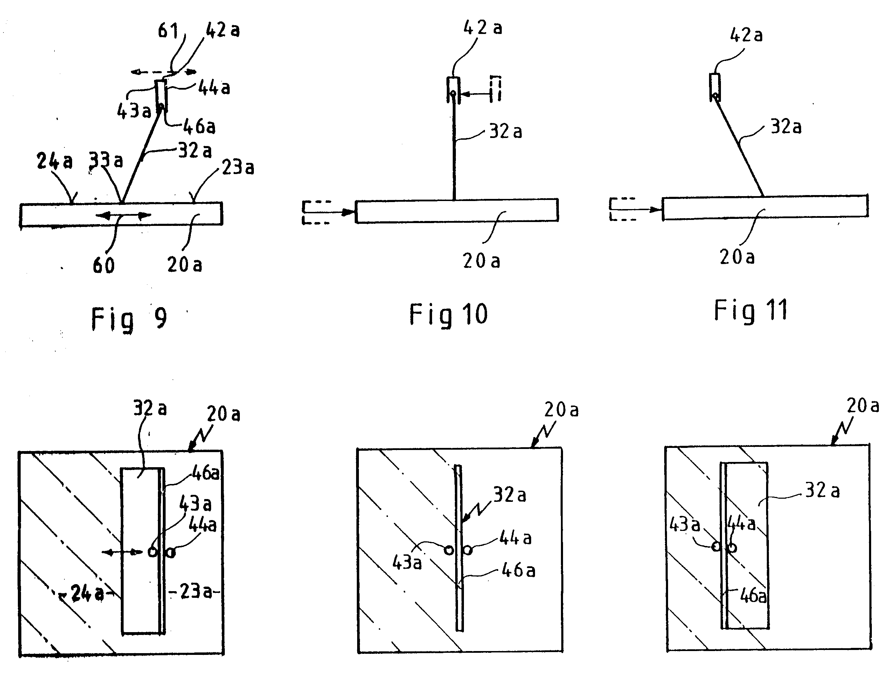

In Fig. 8 ist schließlich die zweite Arbeitsstellung des Werkstücktisches 20 erreicht, in der der strichpunktiert eingezeichnete Bereich, der in Fig. 3 noch auf der Bearbeitungsseite 24 positioniert war, jetzt die Bestückungsseite 23 einnimmt.

Aus der vorstehenden Überlegung folgt, daß die Länge der Zinken 43, 44 bzw. der Hälften 51, 52 der elastischen Lippe 50 so dimensioniert werden muß, daß in der flachsten Endstellung des schwenkbaren Abschnittes 32 der Spritzschutzwand 30, wie sie in den Fig. 3 und 8 gezeigt ist, die Profilleiste 46 noch nicht nach unten aus dem durch die Gabel 42 bzw. die elastische Lippe 50 gebildeten Halteelement herausrutscht. Andererseits muß die Dimensionierung so getroffen werden, daß in der aufgerichteten Stellung des schwenkbaren Abschnittes 32 gemäß Fig. 6 die Profilleiste 46 noch nicht an den Grund der Gabel 42 bzw. des Schlitzes 43 anstößt.

In der oberen Hälfte der Fig. 6 ist noch eingezeichnet, daß die Profilleiste 46 in der Mitte erhöht ausgebildet sein kann, wie strichpunktiert und mit dem Bezugzeichen 46' angedeutet. Diese Erhöhung der Profilleiste 46' im mittleren Bereich ermöglicht, die Zinken 43, 44 kürzer zu gestalten, so daß auch bei flacher verlaufenden Spritzschutzwänden 32 kein Fenster in der Spritzschutzwand 32 vorgesehen zu werden braucht, wie dies mit 47 in Fig. 1 angedeutet ist. Die Erhöhung der Profilleiste 46' in der Mitte hat nämlich die Wirkung, daß die mittlere Spitze der Erhöhung in den abgeklappten Endbereichen der Spritzschutzwand 32 noch sicher von den Zinken 43, 44 erfaßt werden kann, während die flacheren Seitenbereiche in der in Fig. 6 eingezeichneten extremen Mittelstellung bis an den Grund der Gabel 42 heranreichen. Bei optimaler Dimensionierung der Erhöhung 46' gleitet diese Erhöhung somit kontinuierlich am Grund der Gabel 42 entlang, so daß im Extremfall die Zinken 43, 44 nur wenige Millimeter lang ausgebildet zu werden brauchen.

Wenn der Werkstücktisch 20 um 360° verdrehbar ausgebildet sein soll, muß die mittlere Erhöhung 46' symmetrisch zur Mittelachse ausgebildet sein, wie in Fig. 6 angedeutet. Ist jedoch in bevorzugter Weise der Werkstücktisch 20 nur jeweils gegenläufig um 180° drehbar, genügt es, die Erhöhung 46' nur - in der Darstellung der Fig. 6 - rechts von der Mittelachse vorzusehen.

Wenn der Anstellwinkel des schwenkbaren Abschnittes 32 in den Endstellungen der Fig. 3 und 8 nicht zu sehr von 90° abweicht, kann erreicht werden, daß die unteren Enden der Zinken 43, 44 stets auf der Oberfläche des schwenkbaren Abschnittes 32 laufen. Wenn jedoch flachere Anstellwinkel eingestellt werden sollen, wie dies in Fig. 1 und 2 dargestellt ist, so kann es notwendig werden, daß in Fig. 1 eingezeichnete Fenster 47 im schwenkbaren Abschnitt 32 vorzusehen, durch das die unteren Enden der Zinken 43, 44 in den Extremstellungen der Fig. 3 und 8 hindurchreichen können. Die Breite des Fensters 47 entlang der Profilleiste 46 ist dabei gleich dem Abstand d in beiden Richtungen von der Achse 49, wenn der Werkstücktisch 20 um 360° gedreht wird oder aber nur gleich dem Abstand d, wenn der Werkstücktisch 20 um jeweils 180° gegenläufig verdreht wird.

Bei einer Variante der erfindungsgemäßen Werkzeugmaschine, wie sie in den Fig. 9 bis 11 dargestellt ist, besteht der Unterschied zu den zuvor geschilderten Ausführungsbeispielen in folgendem:

Der Werkstücktisch 20a ist beim Ausführungsbeispiel der Fig. 9 bis 11 nicht um eine Hochachse verschwenkbar sondern entweder in einer Horizontalebene verschiebbar, wie mit einem Pfeil 60 angedeutet oder er ist raumfest. In beiden genannten Fällen, insbesondere aber im Falle des raumfesten Werkstücktisches 20a ist die Gabel 42a in Richtung eines Pfeiles 61 ebenfalls in einer horizontalen Richtung verschiebbar und zwar im wesentlichen parallel zur Längserstreckung des Werkstücktisches 20a in Richtung des Pfeiles 60. Wichtig ist allein, daß der Werkstücktisch 20a und die Gabel 42a in dieser Richtung relativ zueinander verschiebbar sind.

In beiden Fällen braucht die Gabel 42a demzufolge auch nicht mehr um eine Vertikalachse drehbar zu sein, weil die Zinken 43a, 44a ihre Drehlage relativ zur Profilleiste 46a nicht ändern.

Wie man nämlich deutlich aus den beiden weiteren Phasenbildern der Fig. 10 und 11 erkennen kann, wird der schwenkbare Abschnitt 32a der Spritzschutzwand zunächst, wie in Fig. 10 dargestellt, in die Vertikale verschwenkt und dann, wie Fig. 11 zeigt, in eine Stellung klappsymmetrisch zu derjenigen der Fig. 9.

Die Anordnung der Fig. 9 bis 11 eignet sich für den Fall, daß ein Spindelstock relativ zum Werkstücktisch 20a in Richtung des Pfeiles 60 mittels einer Führung verschiebbar ist, die in der unteren Hälfte der Fig. 9 bis 11 oberhalb des Werkstücktisches 20a bzw. in den oberen Hälften der Fig. 9 bis 11 hinter dem Werkstücktisch 20a verläuft.

Der Spindelstock kann nun zunächst auf der in den Fig. 9 bis 11 links eingezeichneten strichpunktierten Bearbeitungsseite 24a ein Werkstück bearbeiten. Die seitlich ausladende Kontur des Spindelstocks stört in diesem Falle nicht, weil der schwenkbare Abschnitt 32a von der Bearbeitungsseite 24a weg geklappt ist. Ist die Bearbeitung des Werkstückes abgeschlossen, wird der Spindelstock in der Darstellung der unteren Hälfte der Fig. 9 bis 11 nach oben bzw. der oberen Hälfte der Fig. 9 bis 11 nach hinten verfahren, so daß er oberhalb bzw. hinter der Spritzschutzwand in einer Position rechts von der Spritzschutzwand gelangen kann. Die Spritzschutzwand wird nun mit Hilfe des vorstehend beschriebenen Mechanismus in die in Fig. 11 gezeigte andere Endstellung gebracht und der Spindelstock kann wieder vorfahren, bis er oberhalb der rechten Hälfte des Werkstücktisches 20a in Fig. 11 dort steht, wo in der Phase der Fig. 9 noch die Bestückungsseite 23a war. Da jetzt der schwenkbare Abschnitt 32a nach links weg geklappt ist, kann der Spindelstock in der rechten Hälfte des Werkstücktisches 20a ohne Kollisionsgefahr arbeiten.

Beim Ausführungsbeispiel der Fig. 9 bis 11 kann oberhalb des schwenkbaren Abschnittes 32a der Spritzschutzwand ebenfalls ein raumfester Abschnitt angeordnet sein, der in diesem Falle jedoch zweckmäßigerweise vertikal und nicht abgekröpft verläuft.

## Patentansprüche

1. Werkzeugmaschine mit einem lageveränderlichen Werkstücktisch (20), bei dem ein erster Bereich in einer ersten Position als Bearbeitungsseite (24) erste Werkstücke (26) zum Bearbeiten mittels eines Werkzeuges (12) der Werkzeugmaschine (10) trägt und bei dem ein zweiter Bereich in einer zweiten Position als Bestückungsseite (23) während des Bearbeitens der ersten Werkstücke (26) mit zweiten Werkstücken (25) bestückbar ist, wobei die Position der Bereiche durch Lageveränderung des Werkstücktisches (20) vertauschbar ist, und ferner zwischen den Bereichen eine Spritzschutzwand (30 bis 32) angeordnet ist, die an ihrer Unterseite um eine parallel zur Oberfläche des Werkstücktisches (20) verlaufende Schwenkachse (33) selbsttätig verschwenkbar ist und den von den Bereichen definierten Arbeitsraum (35, 36) für eine Spindel (11) der Werkzeugmaschine (10) bzw. einen Benutzer (27) asymmetrisch unterteilt, derart, daß auf der Bearbeitungsseite (24) ein größerer Arbeitsraum (35) vorhanden ist als auf der Bestückungsseite (23), dadurch gekennzeichnet, daß die Spritzschutzwand (32) an ihrer Oberseite von einem Halteelement (41 bis 44; 50 bis 53) gehalten ist, das die Oberseite beidseits erfassende gabelartige Fortsätze (43, 44; 51, 52 aufweist, daß das Halteelement (41 bis 44; 50 bis 53) im radialen Abstand (d) von einer vertikalen ersten Drehachse (21) des Werkstücktisches (20) oberhalb der Bestückungsseite (23) angeordnet ist und daß die Fortsätze (43, 44; 51, 52) um eine in dem Abstand (d) parallel zur ersten Drehachse (21) verlaufende zweite Drehachse (49) drehbar sind.

2. Werkzeugmaschine mit einem lageveränderlichen Werkstücktisch (20a), bei dem ein erster Bereich in einer ersten Position als Bearbeitungsseite (24a) erste Werkstücke (26a) zum Bearbeiten mittels eines Werkzeuges (12a) der Werkzeugmaschine (10a) trägt und bei dem ein zweiter Bereich in einer zweiten Position als Bestückungsseite (23a) während des Bearbeitens der ersten Werkstücke (26a) mit zweiten Werkstücken (25a) bestückbar ist, wobei die Position der Bereich durch Lageveränderung des Werkstücktisches (20a) vertauschbar ist, und ferner zwischen den Bereichen eine Spritzschutzwand (30a bis 32a) angeordnet ist, die an ihrer Unterseite um eine parallel zur Oberfläche des Werkstücktisches (20a) verlaufende Schwenkachse (33a) selbsttätig verschwenkbar ist und den von den Bereichen definierten Arbeitsraum (35a, 36a) für eine Spindel (11a) der Werkzeugmaschine (10a) bzw. einen Benutzer (27a) asymmetrisch unterteilt, derart, daß auf der Bearbeitungsseite (24a) ein größerer Arbeitsraum (35a) vorhanden ist als auf der Bestückungsseite (23a), dadurch gekennzeichnet, daß die Spritzschutzwand (32a) an ihrer Oberseite von einem Haltelement (41a bis 44a) gehalten ist, das die Oberseite beidseits erfassende gabelartige Fortsätze (43a, 44a) aufweist, und daß das Halteelement (41a bis 44a) und der Werkstücktisch (20a) relativ zueinander in einer Richtung verschiebbar sind, die im wesentlichen senkrecht zur Schwenkachse (33a) verläuft.

3. Werkzeugmaschine nach einem oder mehreren der Ansprüche 1 oder 2, dadurch gekennzeichnet, daß das Halteelement (41 bis 44; 50 bis 53) an der Unterseite einer abgekröpften raumfesten Spritzschutzwand (31) angeordnet ist.

4. Werkzeugmaschine nach einem oder mehreren der Ansprüche 1 bis 3, dadurch gekennzeichnet, daß das Halteelement (41 bis 44; 41a bis 44a) als nach unten geöffnetes gabelförmiges Teil ausgebildet ist.

5. Werkzeugmaschine nach einem oder mehreren der Ansprüche 1 bis 3, dadurch gekennzeichnet, daß das Halteelement (50 bis 53) als elastische Lippe (50) ausgebildet ist, die sich parallel zur Oberseite erstreckt und beidseits eines mittig angeordneten Schlitzes (53) die schwenkbare Spritzschutzwand (32) mit je einer Hälfte (51, 52) auf verschiedenen Seiten überlappt.

6. Werkzeugmaschine nach einem oder mehreren der Ansprüche 1 bis 5, dadurch gekennzeichnet, daß die Oberseite der Spritzschutzwand (32) in der Mitte erhöht (46′) ist.


## Claims

1. A machine tool having a displaceable workpiece table (20) comprising a first area which, in a first position, in which it serves as a machining side (24) carries first workpieces (26) for being machined by means of a tool (12) of the machine tool (10), and a second area which, in a second position, in which it serves as a mounting side (23) can be loaded with second workpieces (25) during the machining of the first workpieces (26), the position of the areas being exchangeable by displacement of the workpiece table (20), a splash-guard wall (30 through 32) being arranged between the areas and being hinged at its lower side for being automatically swivelled about a swivel axis (33) extending parallel to the surface of the workpiece table (20) for asymmetrically subdividing a working space (35, 36) for a spindle (12) of the machine tool (10) and for a user (27), respectively, as defined by the areas, such that a larger working space (35) is provided on the machining side (24) as compared with the mounting side (23), characterized in that the splash-guard wall (32) is held at its upper side by means of a holding element (41 through 44; 50 through 53) having fork-shaped extensions (43, 44; 51, 52) enclosing the upper side between them, that the holding element (41 through 44; 50 through 53) is arranged at a radial distance (d) from a vertical first axis of rotation (21) of the workpiece table (20) above the mounting side (23), and that the extensions (43, 44; 51, 52) are rotatable about a second axis of rotation (49) extending parallel to and at a distance (d) from the first axis of rotation (21).

2. A machine tool having a displaceable workpiece table (20a) comprising a first area which, in a first position, in which it serves as a machining side (24a) carries first workpieces (26a) for being machined by means of a tool (12a) of the machine tool (10a), and a second area which, in a second position, in which it serves as a mounting side (23a) can be loaded with second workpieces (25a) during the machining of the first workpieces (26a), the position of the areas being exchangeable by displacement of the workpiece table (20a), a splash-guard wall (30a through 32a) being arranged between the areas and being hinged at its lower side for being automatically swivelled about a swivel axis (33a) extending parallel to the surface of the workpiece table (20a) for asymmetrically subdividing a working space (35a, 36a) for a spindle (12a) of the machine tool (10a) and for a user (27a), respectively, as defined by the areas, such that a larger working space (35a) is provided on the machining side (24a) as compared with the mounting side (23a), characterized in that the splash-guard wall (32a) is held at its upper side by means of a holding element (41a through 44a; 50a through 53a) having fork-shaped extensions (43a, 44a; 51a, 52a) enclosing the upper side between them, and that the holding element (41a through 44a) and the workpiece table (20a) are displaceable relative to each other along an axis extending essentially perpendicularly to the swivel axis (33a).

3. The machine tool of claim 1 or 2, characterized in that the holding element (41 through 44; 50 through 53) is arranged at the lower side of a bent-off stationary splash-guard wall (31).

4. The machine tool of any of claim 1 through 3, characterized in that the holding element (41 through 44; 41a through 44a) is designed as s fork-shaped element opening downwardly.

5. The machine tool of any of claims 1 through 3, characterized in that the holding element (50 through 53) is designed as an elastic lip (50) extending parallel to the upper side and overlapping the swivellable splash-guard wall (32) with one half (51, 52) each on opposite sides of a central slot (53).

6. The machine tool of any of claim 1 through 5, characterized in that the upper side of the splash-guard wall (32) is centrally elevated (46′).


**Revendications**

1. Machine-outil avec une table porte-pièce (20) de position variable, dans laquelle une première zone, dans une première position servant de côté d'usinage (24), porte des premières pièces (26) à usiner au moyen d'un outil (12) de la machine-outil (10) et dans laquelle une seconde zone, dans une seconde position servant de côté d'équipement (23), peut être équipée pendant l'usinage des premières pièces (26) avec des secondes pièces (25), la position des zones pouvant être échangée par modification de la position de la table porte-pièce (20) et une paroi de protection contre les projections (30 à 32) qui peut pivoter automatiquement sur son côté inférieur, autour d'un axe de pivotement (33) parallèle à la surface de la table porte-pièce (20) et qui partage asymétriquement l'espace de travail (35, 36), défini par les zones, pour une broche (11) de la machine-outil (10) ou un utilisateur (27), étant prévue entre les zones, de manière que sur le côté d'usinage (24) l'espace de travail (35) soit plus grand que sur le côté d'équipement (23), caractérisée en ce que la paroi de protection contre les projections (32) est maintenue sur son côté supérieur par un élément de retenue (41 à 44 ; 50 à 53) qui comporte des prolongements (43, 44 ; 51, 52) en fourche enserrant de part et d'autre le côté supérieur, en ce que l'élément de retenue (41 à 44 ; 50 à 53) est placé à une distance radiale (d) d'un premier axe de rotation (21) vertical de la table porte-pièce (20), au-dessus du côté d'équipement (23) et en ce que les prolongements (43, 44 ; 51, 52) peuvent tourner autour d'un second axe de rotation (49) parallèle, à la distance (d), au premier axe de rotation (21).

2. Machine-outil avec une table porte-pièce (20a) de position variable, dans laquelle une première zone, dans une première position servant de côté d'usinage (24a), porte des premières pièces (26a) à usiner au moyen d'un outil (12a) de la machine-outil (10a) et dans laquelle une seconde zone, dans une seconde position servant de côté d'équipement (23a), peut être équipée pendant l'usinage des premières pièces (26a) avec des secondes pièces (25a), la position des zones pouvant être échangée par modification de la position de la table porte-pièce (20a) et une paroi de protection contre les projections (30a à 32a) qui peut pivoter automatiquement sur son côté inférieur, autour d'un axe de pivotement (33a) parallèle à la surface de la table porte-pièce (20a) et qui partage asymétriquement l'espace de travail (35a, 36a), défini par les zones, pour une broche (11a) de la machine-outil (10a) ou un utilisateur (27a), étant prévue entre les zones de manière que sur le côté d'usinage (24a) l'espace de travail (35a) soit plus grand que sur le côté d'équipement (23a), caractérisée en ce que la paroi de protection contre les projections (32a) est maintenue sur son côté supérieur par un élément de retenue (41a à 44a ; 50a à 53a) qui comporte des prolongements (43a, 44a ; 51a, 52a) en fourche enserrant de part et d'autre le côté supérieur, et en ce que l'élément de retenue (41a à 44a) et la table porte-pièce (20a) peuvent coulisser l'un par rapport à l'autre dans une direction qui est à peu près perpendiculaire à l'axe de pivotement (33a).

3. Machine-outil selon l'une ou les deux revendications 1 et 2, caractérisée en ce que l'élément de retenue (41 à 44 ; 50 à 53) est placé sur le côté inférieur d'une paroi de protection contre les projections (31), coudée, fixe dans l'espace.

4. Machine-outil selon l'une ou plusieurs des revendications 1 à 3, caractérisée en ce que l'élément de retenue (41 à 44 ; 41a à 44a) est un élément en forme de fourche ouvert vers le bas.

5. Machine-outil selon l'une ou plusieurs des revendications 1 à 3, caractérisée en ce que l'élément de retenue (50 à 53) est une lèvre (50) élastique qui s'étend parallèlement au côté supérieur et qui recouvre par une moitié (51, 52), sur différents côtés, de part et d'autre d'une fente (53) placée au centre, la paroi de protection contre les projections (32) pivotantes.

6. Machine-outil selon l'une ou plusieurs des revendications 1 à 5, caractérisée en ce que le côté supérieur de la paroi de protection contre les projections (32) est surélevé (46′) au milieu.

Fig 1

Fig 2a

Fig 2

Fig 3

Fig 4

Fig 5

Fig 8

Fig 7

Fig 6

Fig 9

Fig 10

Fig 11

EP 0 329 982 B1